# EUROPEAN PATENT APPLICATION

(11) **EP 1 174 736 A1**
(43) Date of publication of application: **23.01.2002**
(21) Application number: 00913027.9
(22) Date of filing: 31.03.2000
(51) Int. Cl.: G02B 5/30, G02B 5/02

(54) **OPTICALLY ANISOTROPIC DEVICE**

(30) Priority: 31.03.1999 JP 9142099
(71) Applicant: Nippon Mitsubishi Oil Corporation, Tokyo 105-0003 (JP)
(72) Inventor: NUMAO, Yosuke, Central Technical Research Lab., Naka-ku, Yokohama-shi, Kanagawa 231-0815 (JP); YODA, Eiji, Central Technical Research Lab., Naka-ku, Yokohama-shi, Kanagawa 231-0815 (JP); UESAKA, Tetsuya, Central Technical Research Lab., Naka-ku, Yokohama-shi, Kanagawa 231-0815 (JP); TOYOOKA, Takehiro, Central Technical Research Lab., Naka-ku, Yokohama-shi, Kanagawa 231-0815 (JP)
(74) Representative: Colmer, Stephen Gary
(86) International application number: JP0002083
(87) International publication number: WO0058764

(57) **Abstract**

The present invention proposes an optically anisotropic element which has excellent mechanical property and display properties such as contrast, angle-of-sight property and the like. The present optically anisotropic element is constituted of an optically anisotropic film and a light diffusion adhesive layer.

## Description

### Technical Field

The invention relates to an optically anisotropic element in which the display properties thereof such as contrast, angle-of-sight property and the like are significantly improved and the mechanical properties thereof are also greatly improved. The present invention also relates to a twisted-nematic type liquid crystal display element in which the optically anisotropic element is arranged.

### Background Art

An active-driven, twisted-nematic type liquid crystal display device (which will be referred to simply as "TN-LCD" hereinafter) employing a TFT element, a MIM element or the like has image quality comparable to that of CRT when viewed from the front, in addition to the properties intrinsic to LCD such as thin thickness, reduced weight and low electricity consumption. Thus, TN-LCD is widely used as a display device for a laptop personal computer, a mobile television, a mobile information terminal and the like. However, in the conventional TN-LCD, a problem related to "angle of sight" such as a problem that displayed colors look changed or the display contrast is lowered when the display is seen at an oblique angle, due to the refractive index anisotropy of the liquid crystal molecules, essentially arises. Therefore, there has been a strong demand for improvement of the conventional TN-LCD, and various attempts have been made for achieving such improvement.

In recent years, various types of optical compensation film have been proposed in order to solve the aforementioned "angle of sight" problem, and the development and progress of TN-LCD which characteristically has a wide angle of sight has been remarkable. For example, in JP-A 4-349424 Laid-Open and JP-A 6-250166 Laid-Open, an optical compensation employing a cholesteric film having a tilted spiral axis, as well as a liquid crystal display device using the optical compensation film, is proposed. Further, in JP-A 5-249547 Laid-Open and JP-A 6-331979 Laid-Open, a LCD employing a negative uniaxial compensator having a tilted optical axis is proposed, and as a specific embodiment thereof, a multi-layered thin film compensator is used. Yet further, in JP-A 10-186356 Laid-Open, JP-A 10-206637 Laid-Open etc., an optical compensation film in which liquid crystal exhibiting optically positive uniaxiality has been nematic-hybrid-oriented and fixed, as well as a liquid crystal display device using the optical compensation film, is proposed. Yet further, in JP-A 8-50206 Laid-Open etc., an optical compensation film which is composed of discotic liquid crystal molecules exhibiting optically negative uniaxiality, as well as a liquid crystal display device using the optical compensation film, is proposed. By using these optical compensation films, the "angel of sight" property of TN-LCD can now be significantly improved as compared with the conventional liquid crystal display device. In addition, simultaneous with the development of the LCD technique, in order to satisfy the demand for still wider angel of sight, various types of the optical element in which the aforementioned optical compensation film and the light diffusion layer are combined have been proposed, because such an optical element can supposedly satisfy the demand for still wider angle of sight.

For example, in JP-A 10-104611 Laid-Open, a liquid crystal display device in which an optical compensation means is provided at the both sides of a liquid crystal cell for driving and a light diffusion layer is provided at the side of the light emission surface of the liquid crystal cell portion. In JP-A 10-104611 Laid-Open, the angle of sight can be made wider by providing the light diffusion layer at the light emission-side surface of a polarizing plate, because the light which has been emitted and transmitted through the polarizing plate is diffused in every direction by the light diffusion layer. Further, in JP-A 10-142591 Laid-Open, a liquid crystal display device which includes an optically anisotropic film exhibiting negative uniaxiality and a light diffusing film.

However, in the case in which a light diffusion layer is provided at the light emission-side surface as disclosed in JP-A 10-104611 Laid-Open, since the light diffusion layer is provided on the outermost surface of LCD, the light diffusion layer must be subjected to treatments other than the treatment related to the light diffusion property, which treatments including: a reflection preventing treatment such as the anti-glare treatment; a treatment for providing the surface of the light diffusion layer with hard coating; and providing the light diffusion layer with light resistance property, whereby the production costs of the light diffusion layer are increased. In the case in which an optically anisotropic film and a light diffusion film are used in the laminated manner as disclosed in JP-A 10-142591, there arises a problem that the thickness of the optical member increases and thus the "thin structure" which is one of the advantageous characteristics of LCD is marred. However, in the case of JP-A 10-142591, there may also arise a problem that, when the optical element including the polarizing plate is stacked to the liquid crystal cell, the optical element becomes too thick to be processed by the conventional stacking device. In the case in which the optical element is provided between the polarizing plate and the liquid crystal cell as described above, there is a possibility that separation is generated between the light diffusion film and the polarizing plate or between the light diffusion film and angle-of-sight improving film when the structure is left at a high temperature or in a condition of high temperature and high humidity, thereby resulting in the problematic mechanical property in terms of the reliability test and the like. It should be noted that the aforementioned known examples are hereby incorporated as references.

### Object of the Invention

The present invention aims at solving the aforementioned problems. One object of the present invention is to provide an optically anisotropic element which has improved angle-of-sight property of TN-LCD and is excellent in mechanical property, as well as a twisted-nematic type liquid crystal display element including the optically anisotropic element, by combining a specific optically anisotropic film and a light diffusion adhesive layer but without modifying the production process of TN-LCD.

### Disclosure of the Invention

Specifically, in a first aspect of the present invention, an optically anisotropic element is characterized in that it is constituted of an optically anisotropic film (A) and at least one layer of light diffusion adhesive layer (B).

In a second aspect of the present invention, the optically anisotropic film (A) of the optically anisotropic element is an optically anisotropic film composed of liquid crystal molecules exhibiting positive uniaxiality or negative uniaxiality.

In a third aspect of the present invention, the optically anisotropic film (A) of the optically anisotropic element is formed from low-molecular weight and/or high-molecular weight liquid crystal.

In a fourth aspect of the present invention, an optical laminated-layer structure is constituted of the optically anisotropic element and a polarizing plate.

In a fifth aspect of the present invention, a twisted-nematic type liquid crystal display device at least including: a liquid crystal cell for driving, the liquid crystal cell being composed of nematic liquid crystal and a pair of transparent base plate having an electrode; an upper side polarizing plate provided on the upper side of the liquid crystal cell; and a lower side polarizing plate provided on the lower side of the liquid crystal cell, is characterized in that at least one layer of the optically anisotropic element is provided between the liquid crystal cell and one of the upper side polarizing plate and the lower side polarizing plate, or both between the liquid crystal cell and the upper side polarizing plate and between the liquid crystal cell and the lower side polarizing plate.

### Embodiment

The present invention will be described further in detail hereinafter.

The optically anisotropic element of the present invention has significantly improved angle-of-sight property of TN-LCD and excellent mechanical property.

When TN-LCD is classified according to the method of driving thereof, TN-LCD is specifically classified to, for example, the simple matrix type or the active matrix type, the active matrix type employing a TFT (Thin Film Transistor) electrode which uses an active element as an electrode, a MIM (Metal Insulator Metal) electrode or a TFD (Thin Film Diode) electrode. The optically anisotropic element of the present invention demonstrates an excellent effect in any of the aforementioned driving methods.

The half tone gray scale method (the pixel division method) and the domain division method as the known technique have been resulted from the attempts to increase the angle of sight of LCD from the side of the liquid crystal cell for driving. The optically anisotropic element of the present invention effectively acts on a LCD whose angle of sight has been improved to some extent in such a manner, enabling further increase in the angle of sight.

The optically anisotropic element of the present invention is constituted of an optically anisotropic film (A) and at least one layer of light diffusion adhesive layer (B).

The type of the optically anisotropic film (A) is not particularly restricted as long as the film is optically anisotropic. For example, a liquid crystal film in which the orientation state of the liquid crystal has been fixed, an extended film produced by subjecting a macromolecular film to an orientation treatment and the like can be used. Among these examples, a liquid crystal film composed of liquid crystal molecules exhibiting optically positive or negative uniaxiality is preferably used, and a liquid crystal film exhibiting optically positive or negative uniaxiality whose hybrid-orientation state (the state in which the liquid crystal molecules have been modified in the film thickness direction) has been fixed is more preferably used as the optically anisotropic film (A), in terms of obtaining excellent effect of improving angle-of-sight property of TN-LCD.

The liquid crystal film whose hybrid-orientation state has been fixed can be obtained by shaping a liquid crystal substance which can form nematic hybrid orientation to a film-like shape. The molecular shape of the aforementioned liquid crystal substance is not restricted to any particular molecular shape such as a rod-like and a disc-like shape, and the molecular weight of the liquid crystal substance is not particularly restricted to a low or high molecular weight, either. The aforementioned "liquid crystal substance" simply represents a liquid crystal compound or a liquid crystal composition which can exhibit optically positive or negative uniaxiality. As such a liquid crystal substance, either a liotropic liquid crystal substance or a thermotropic liquid crystal substance may be used.

Specific examples of the liquid crystal substance described above include: a low-molecular weight liquid crystal such as a biphenyl derivative, a phenylbenzoate derivative, a stilbene derivative, a triphenylene derivative and a truxene derivative; a main-chain type macromolecular liquid crystal such as polyester, polyamide, polycarbonate and polyesterimide; and a side-chain type macromolecular liquid crystal such as polyacrylate, polymethacrylate, polymalonate and polysiloxane.

As the optically anisotropic film (A) formed from the aforementioned low-molecular weight liquid crystal, a liquid crystal film, which is obtained by subjecting the aforementioned liquid crystal molecules to nematic hybrid orientation and fixing the resulting orientation state by glass solidification or solidification by way of a thermal/photocrosslinking reaction, is preferably used. Here, a film obtained by subjecting the rod-like liquid crystal represented by a biphenyl drivative, a phenylbenzoate derivative, a stilbene derivative and the like to fixing of the hybrid orientation can be employed as an optically anisotropic film (a1) composed of liquid crystal molecules exhibiting optically positive uniaxiality. A film obtained by subjecting the disc-like liquid crystal represented by a triphenylene derivative or a truxene derivative to fixing of the hybrid orientation can be employed as an optically anisotropic film (a2) composed of liquid crystal molecules exhibiting optically negative uniaxiality. The optically anisotropic film (a1) can be obtained by, for example, the method disclosed in WO97/44702 Laid-Open. The optically anisotropic film (a2) can be obtained by, for example, the method disclosed in JP-A 8-50206 Laid-Open and the method disclosed in JP-A 8-334621 Laid-Open.

As the aforementioned macromolecular liquid crystal, liquid crystalline polyester is preferable because liquid crystalline polyester exhibits excellent orientation property in forming nematic-hybrid orientation and can be relatively easily synthesized. Specific examples of liquid crystalline polyester include those containing as the essential component: homeotropic oriented liquid crystalline polyester provided with an aromatic group containing a bulky substituent group in a structural unit constituting the main chain as disclosed in JP-A 10-186356 Laid-Open and JP-A 10-206637 Laid-Open, an aromatic group containing a long chain alkyl group, and an aromatic group containing fluoride atom; or homeotropic oriented liquid crystalline polyester including a functional, structural unit derived from a compound having a C₃-C₂₀ long chain alkyl group or a C₂-C₂₀ long chain fluoroalkyl group or the like at one end or both ends of the macromolecular chain and also having a functional site such as monoalcohol or monocarboxilic acid. In general, the main chain of liquid crystalline polyester is formed by the di-functional structural unit such as dicarboxilic acid unit, diol unit and oxycarboxilic acid unit or the multi-functional structural unit other than the aforementioned units. As the liquid crystalline polyester described above, that having ortho-substituted aromatic unit in the main chain is preferable. Specific examples of such a liquid crystalline polyester include those having catechol unit, salicylic acid unit, phthalic acid unit, 2,3-naphthalene diol unit, 2,3-naphthalene dicarboxylic acid unit and those having a substituent group on the benzene rings of the aforementioned units.

In the optically anisotropic film (A) of the present invention formed from the macromolecular liquid crystal as described above, it is preferable to use, as the optically anisotropic film (a3), a film composed of liquid crystal molecules which exhibits optically positive uniaxiality and is obtained by subjecting the aforementioned liquid crystal molecules to hybrid orientation and fixing the resulting orientation state by glass solidification or solidification by way of a thermal/photo-crosslinking reaction. The optically anisotropic film (a3) can be obtained by preparing a solution of the macromolecular liquid crystal, applying the solution on an orientation base plate, removing the solvent, and subjecting the product to the heating and cooling treatment, as is taught by the methods disclosed in the aforementioned Laid-Open references. The conditions in selection of the solution, removal of the solvent and the heating and cooling treatments are each determined, in consideration of types of macromolecular liquid crystal used, optical parameters of desired nematic-hybrid orientation and the like.

The optically anisotropic films (a1), (a2) and (a3) described above can be used as an optically anisotropic film (A) in any of the following forms: a form in which a liquid crystal film is simply formed on an orientation base plate (orientation base plate/(orientation film)/liquid crystal film); a form in which a liquid crystal film has been transferred to a transparent base plate film or the like which is different from the orientation base plate (transparent base plate film/liquid crystal film); and a single layer form of liquid crystal film (liquid crystal film), in a case in which the liquid crystal film is capable of supporting itself.

Examples of the transparent base plate film described above include a triacetyl cellulose film marketed under trademarks such as Fujitac (manufactured by Fuji Photo Film co.) and Konicatac (manufactured by Konica co.), as well as other films marketed under trademarks such as TPX film (manufactured by Mitsui Chemicals Co.), Arton film (manufactured by JSR Co.), Zeonex film (manufactured by Zeon Co.) and Acryplene film (manufactured by Mitsubishi Rayon co.).

As the transfer method, a method disclosed in JP-A 4-57017 Laid-Open and JP-A 5-333313 Laid-Open which method including the steps of: applying an adhesive on a liquid crystal film layer; laminating another base plate film which is different from the orientation base plate with the liquid crystal film layer; solidifying the adhesive thereafter; and peeling off the orientation base plate from the film laminated structure, thereby transferring only the liquid crystal film, can be employed. When a film which is optically anisotropic (such as rubbing polyimide film, rubbing polyethylene terephthalate film and the like) or a film which looks opaque in the range of visible light wavelength is used as the orientation base plate, the aforementioned method is most preferably employed.

Next, type of the light diffusion adhesive layer (B) described above is not particularly restricted as long as the light diffusion adhesive layer (B) is adhesive and has a characteristic of isotropically or anisotropically diffusing the incident light. Examples of the light diffusion adhesive layer include a sheet-shaped or film-shaped material which is incapable of supporting itself and in which particles having a refractive index different from that of adhesive matrix thereof have been dispersed in the matrix. Specific examples of such a material include that, in whose matrix composed of at least one type of adhesive selected from the group consisting of an acryl-based adhesive, a rubber-based adhesive, a silicon-based adhesive, an ethylene-vinyl acetate copolymer-based adhesive, a urethane-based adhesive, a vinyl ether-based adhesive, a polyvinyl alcohol-based adhesive and a polyacrylamide-based adhesive, any appropriate type of particles selected from the group consisting of: organic particles such as polystyrene-based particles having average particle diameter of 0.5 to 5 µm, polymethacrylic acid-based particles or the like; inorganic particles such as silica, alumina, titania, zirconia, tin oxide, indium oxide, cadmium oxide, antimony oxide or the like; hollow particles which enclose gases therein; microcapsules which enclose liquid therein; and the like, have been dispersed. As the matrix, the acryl-based adhesive is especially preferable because the acryl-based adhesive has excellent transparency, whether resistance, heat resistance and the like. When a multi-laminated layers of the light diffusion adhesive layer (B) is to be obtained, these layers may be produeced by combining layers of one type of material or different types of materials.

As the aforementioned acryl-based adhesive, any known acryl-based adhesive which is appropriate for the application can be used. Examples of such an acryl-based adhesive include an adhesive mainly composed of acryl-based polymers in which polymers at least one type of acrylic acid-based alkyl ester is used. Here, the acrylic acid-based alkyl ester is constituted of ester of acrylic acid or methacrylic acid having a C₁-C₁₈ normal or branched alkyl group such as the methyl group, ethyl group, n-propyl group, isopropyl group, n-butyl group, t-butyl group, isobutyl group, amyl group, isoamyl group, hexyl group, heptyl group, cyclohexyl group, 2-ethylhexyl group, octyl group, isooctyl group, nonyl group, isononyl group, decyl group, undecyl group, lauryl group, tridecyl group, tetradecyl group, stearyl group, octadecyl group.

Additives may be blended to the aforementioned light diffusion adhesive, in an appropriate manner, unless addition thereof reduces the effect of the present invention. Examples of the additives include: an adhesiveness-imparting agent such as a petroleum-based resin, a rosin-based resin, a terpene-based resin, a synthetic petroleum-based resin, a phenol-based resin, a xylene-based resin, an aliphatic petroleum resin, a coumarone-indene resin, a styrene-based resin, dicyclopentadiene-based resin; a softener such as a phthalate, a phosphate, chlorinated paraffin polybutene, polyisobutylene; various fillers, anti-aging agent, a crosslinkig agent; and the like.

By using the light diffusion adhesive agent as described above, an optically anisotropic element constituted of the optically anisotropic film (A) and the light diffusion adhesive layer (B) is obtained.

Any known method can be employed, in an appropriate manner, as the method of producing the optically anisotropic element. Examples of the method include: a method comprising the steps of preparing a solution of the light diffusion adhesive in which the solid content is generally 10 to 40 mass % or so, in a form of a solution using an appropriate organic solvent such as toluene, ethyl acetate or the like, or a solution in which the solid content has been dispersed in water, or an emulsion, then applying the thus prepared solution directly on the optically anisotropic film by an appropriate application method such as the casting method and the coating method; a method comprising the steps of applying the light diffusion adhesive agent in a form of a mixture or the like of the monomer components, to the optically anisotropic film, and then subjecting the product to the radioactive ray irradiation treatment; and a method comprising the steps of forming the light diffusion adhesive layer on a separator in a manner similar to the aforementioned method and then stacking the light diffusion adhesive layer to the optically anisotropic film. In a case in which the light diffusion adhesive layer is prepared as the multi-laminated layers, such multi-laminated layers can be formed, in an appropriate manner, by the multiple coating method or the multiple-stacking method or the like. When the multi-laminated-type light diffusion adhesive layer is provided on the both surfaces of the optically anisotropic film, the light diffusion adhesive layer provided at the upper surface of the optically anisotorpic film may have a different composition or may be formed of a different type of material from that of the light diffusion adhesive layer provided at the lower surface of the optically anisotorpic film. Further, regarding the optically anisotropic film surface on which the light diffusion adhesive layer is provided, single or multi-laminated light diffusion adhesive layer(s) can be provided on each of the liquid crystal film layer surface, the orientation base plate surface, a support film surface which is different from the orientation base plate.

The film thickness of the light diffusion adhesive layer (B) is not particularly restricted. In general, the film thickness of the light diffusion adhesive layer (B) is in a range of 1 to 100 µm, preferably in a range of 5 to 50 µm, and more preferably in a range of 10 to 30 µm.

The whole ray transmittance of the light diffusion adhesive layer (B) is generally 50 % or more, preferably 60 % or more, and more preferably 70 % or more. Further, the diffusion transmittance of the light diffusion layer is generally in a range of 10 to 90 %, preferably in a range of 20 to 75 %, and more preferably in a range of 30 to 60 %.

The optically anisotropic element of the present invention is preferably employed as a member for improving angle of sight, such as twisted-nematic type liquid crystal display element. In a case in which the display element includes a polarizing plate, the optically anisotropic element can be provided in the display element as a laminated structure in which the optically anisotropic element is laminated with the polarizing plate.

Examples of the method of producing a laminated structure constituted of a polarizing plate and an optically anisotropic element include: a method in which the aforementioned light diffusion adhesive layer (B) is utilized, together with the polarizing plate, for forming laminated layers thereof; and a method in which another adhesive layer or bonding layer is interposed between a polarizing plate and an optically anisotropic film (A) so as to form laminated layers thereof. In consideration of simplifying the production process and reducing the production costs, the method in which the light diffusion adhesive layer is utilized together with the polarizing plate for forming laminated layer thereof is more preferable. The type of the adhesive or bonding agent is not particularly restricted as long as the adhesive or bonding agent satisfies the required optical grade. Examples thereof include any appropriate adhesive or bonding agent selected from the group consisting of the acryl-based, epoxy-based, ethylene-vinyl acetate copolymer-based, urethane-based adhesives and mixture thereof. These adhesive or bonding agents can be used without causing any problem, regardless of the type (such as thermosetting type, photo-setting type, electron beam-setting type etc.) thereof.

Further, by providing the light diffusion adhesive layer (B) on the polarizing plate in a manner similar to the aforementioned method and then laminating the optically anisotropic film (A) thereon by way of the light diffusion adhesive layer (B), a laminated structure which has substantially the same construction as the laminated structure formed from the polarizing plate and the optically anisotropic element composed of the optically anisotropic film and the light diffusion adhesive layer, can be produced.

As the polarizing plate, any appropriate type of polarizing plate which effects polarization can be employed. In general, a polarizing plate which is formed by a polarizing film is used. In the present case, the type of the polarizing film is not particularly restricted. Examples thereof include: a polyvinyl alcohol-based film or a partially formalized polyvinyl alcohol-based film; a film produced by making, a hydrophilic macromolecular film such as an ethylene-vinyl acetate copolymer-based partially saponified film or a cellulose-based film, absorb iodine and/or dichromatic dyes and then orienting the product; a polyene orientation film such as a product obtained by subjecting polyvinyl alcohol to a dehydration treatment or a product obtained by subjecting polyvinyl chloride to the dehydrochlorination treatment. The film thickness of the polarizing film is generally in a range of 5 to 80 µm, but is not restricted to this range. The polarizing plate may be formed as the polarizing film itself or by providing a transparent protection layer on at least one side of the polarizing film. The type of the transparent protection layer is not particularly restricted as long as the transparent protection layer has excellent transparency, mechanical strength, thermo-stability, moisture shielding property and the like. Examples of such a transparent protection layer include a polyester-based resin, a polyether sulfone-based resin, a polycarbonate-based resin, a polyamide-based resin, a polyimide-based resin, a polyolefin-based resin, an acryl-based resin, an acetate-based resin, a cellulose-based resin, or an appropriate thermosetting type or UV-setting type resin selected from the group consisting of the acryl-based, urethane-based, acryl-urethane-based, epoxy-based, silicone-based resin.

The liquid crystal display element which employs the optically anisotropic element of the present invention can be formed according to the technique known in the art. Specifically, a liquid crystal display element can generally be formed by assembling, in an appropriate manner, the required components such as a twisted-nematic type liquid crystal cell for driving composed of nematic liquid crystal and a pair of transparent base plate having an electrode, a polarizing plate and an illumination system. The present invention does not particularly restrict this general assembly of a liquid crystal display element, except that the optically anisotropic element of the present invention is at least provided between the liquid crystal cell and one of the upper side polarizing plate and the lower side polarizing plate, or both between the liquid crystal cell and the upper side polarizing plate and between the liquid crystal cell and the lower side polarizing plate. As described above, when a liquid crystal film whose nematic hybrid orientation has been fixed is used as the optically anisotropic film (A) which constitutes the optically anisotropic element of the present invention, the upper portion of the optically anisotropic element is not optically equivalent to the lower portion of the same optically anisotropic element because the upper portion of the liquid crystal film is not optically equivalent to the lower portion of the liquid crystal film. Accordingly, the effect of improving "angle of sight" of the liquid crystal display element varies in accordance with the optical characteristics of the optically anisotropic film and the structure/arrangement of the optically anisotropic element. For example, the angle-of-sight improving effect may vary depending on which of the light diffusion adhesive layer (B) and the optically anisotropic film (A) is provided closer to the liquid crystal cell. Especially, in the case in which the optically anisotropic element is provided both between the liquid crystal cell and the upper side polarizing plate and between the liquid crystal cell and the lower side polarizing plate, if the light diffusion adhesive layer (B) is structured as multi-laminated layers at one of the upper polarizing plate side and the lower polarizing plate side, the angle-of-sight improving effect may significantly vary depending on which of the light diffusion adhesive layer (B) and the optcially anisotropic film(A) is provided closer to the liquid crystal cell. In the present invention, neither the structure of the optically anisotropic element itself or the positional arrangement thereof (i.e., which of the upper and lower portions of the optically anisotropic element is provided closer to the liquid crystal cells for driving) is not particularly restricted. The optically anisotropic element of the present invention is to be provided in a liquid crystal display element, in accordance with the cell parameters of the liquid crystal display element in which the optically anisotropic element is arranged and the optical performances which are required of the liquid crystal display element.

### Examples

Examples of the present invention will be described hereinafter. It should be noted that the present invention is not restricted to these examples.

### Example 1

An optically anisotropic film composed of liquid crystal molecules exhibiting positive uniaxiality was prepared according to the embodiment described in JP-A 10-186356. Thereafter, a light diffusion adhesive layer (the whole ray transmittance: 90.1 %, the diffusion transmittance: 47.1%) was formed by providing fine particles of polystyrene, which is dispersed in an acryl-based adhesive, on a separator (a polyethylene terephthalate film). An optically anisotropic element was produced by stacking the light diffusion adhesive layer on one surface of the optically anisotropic film.

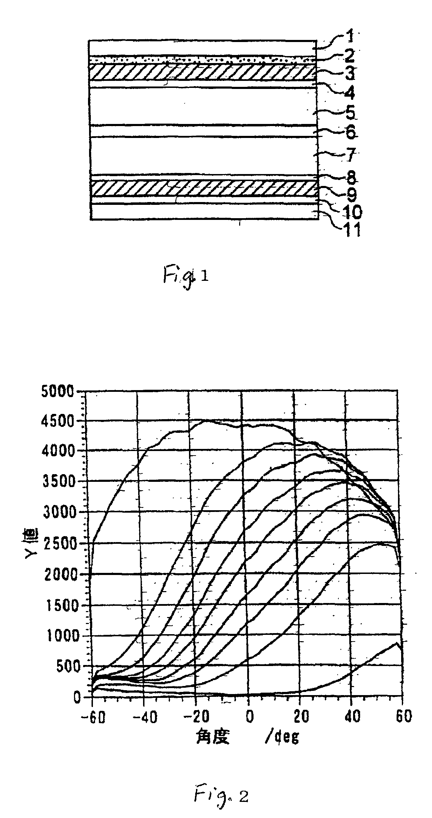

By using the obtained optically anisotropic element, a liquid crystal display device having the arrangement as shown in Fig. 1 was produced. In the TN type cell for driving which was used, the liquid crystal material thereof was ZLI-4792 and the cell parameters thereof were as follows: cell gap being 4.8 µm; twisted angle being 90° (twisted leftward); pretilt angle being 4°. A voltage in a range of 0 to 6 V was applied to the liquid crystal cell, and the transmittance in the up/down direction at each gradation was measured by using the color/brightness system BM-5 manufactured by Topcon co. The results are shown in Fig. 2. Further, for comparison, the same measurement as described above was carried out for a liquid crystal display device in which only the optically anisotropic film of the present embodiment was used. The results thereof are shown in Fig. 3. In the case in which only the optically anisotropic film was used, gradation inversion occurred when the angle of sight was -20° i.e., when the liquid crystal cell was looked up from the low position with the angle, formed between the sight line and the line normal to the liquid crystal cell, being 20°. On the other hand, in case in which the optically anisotropic element of the present embodiment was used, no gradation inversion occurred even when the angle of sight being -60°.

Yet further, in order to examine the mechanical properties in a case in which the optical element was held in a condition of high temperature or a condition of high temperature and high humidity, a laminated-layer structure, having a form in which the optically anisotropic film and a polarizing plate were stacked to each other with a light diffusion adhesive layer interposed therebetween, was produced.

### Example 2

An optically anisotropic film composed of liquid crystal molecules exhibiting positive uniaxiality was prepared according to the embodiment described in WO97/44702. A laminated-layer structure of the present example was produced by stacking the optically anisotropic film and a polarizing plate to each other with a light diffusion adhesive layer interposed therebetween, in a manner similar to that of example 1.

### Example 3

An optically anisotropic film composed of liquid crystal molecules exhibiting negative uniaxiality was prepared according to the embodiment described in JP-A 8-50206. A laminated-layer structure of the present example was produced by stacking the optically anisotropic film and a polarizing plate to each other with a light diffusion adhesive layer interposed therebetween, in a manner similar to that of example 1.

### Comparative Example 1

The optically anisotropic film of the example 1 and the light diffusion film ("IDS-16" manufactured by Dainippon Printing co.) were stacked to each other by using a commercially available epoxy-based UV-setting type adhesive. A polarizing plate was stacked to the light diffusion film surface by way of an adhesive layer.

### Comparative Example 2

The optically anisotropic film of the example 2 and the light diffusion film ("IDS-16" manufactured by Dainippon Printing Co.) were stacked to each other by using a non-carrier adhesive manufactured by Tomoegawa Paper Co. A polarizing plate was stacked to the light diffusion film surface by way of an adhesive layer.

### Comparative Example 3

The optically anisotropic film of the example 3 and the light diffusion film ("IDS-16" manufactured by Dainippon Printing Co.) were stacked to each other by using a commercially available epoxy-based UV-setting type adhesive. A polarizing plate was stacked to the light diffusion film surface by way of an adhesive layer.

### (Durability Test)

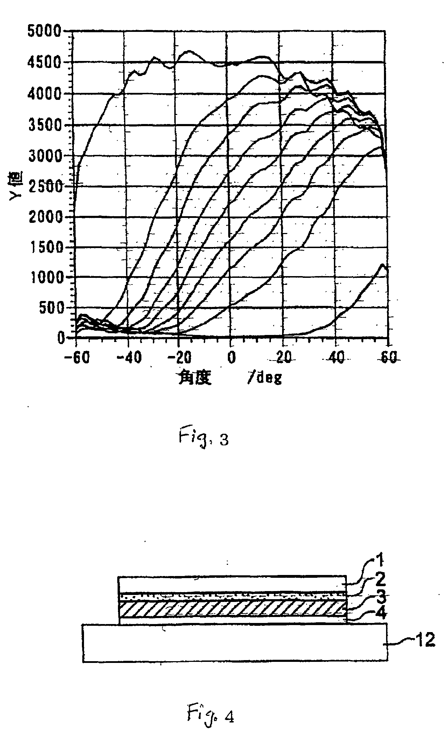

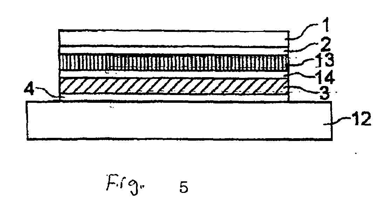

The laminated-layer structures of examples 1-3 and comparative examples 1-3 were each stacked to glass by way of an adhesive layer. The structure in which such a laminated-layer structure was stacked to glass is shown in Figs. 4 and 5. For each laminated-layer structure of examples 1-3 and comparative examples 1-3, one structure stacked to glass was put in a dry, constant-temperature bath in which the temperature was set at 90 ºC and another structure stacked to glass was put in a constant-temperature and constant-humidity bath at which the temperature was 60 ºC and the relative humidity was 90 %. After 500 hours elapsed, the state of peeling was examined for each laminated-layer structure. The results of this durability test are summarized in Table 1.

**Table 1**

| | State of peeling after the high-temperature test | State of peeling after the high-temperature and high-humidity test |
|---|---|---|
| Example 1 | No peeling was observed. | No peeling was observed. |
| Example 2 | No peeling was observed. | No peeling was observed. |
| Example 3 | No peeling was observed. | No peeling was observed. |
| Comparative Example 1 | No peeling was observed. | Peeling was generated at the interface between the light diffusion film and the UV-setting type adhesive. |
| Comparative Example 2 | Peeling was generated at the interface between the optically anisotropic film and the adhesive. | Peeling was generated at the interface between the light diffusion film and the optically anisotropic film. |
| Comparative Example 3 | Peeling was generated at the interface between the light diffusion film and the UV-setting type adhesive. | Peeling was generated at the interface between the light diffusion film and the UV-setting type adhesive. |

The optically anisotropic element of the present invention is constituted of the optically anisotropic film and the light diffusion adhesive layer. Accordingly, the present optically anisotropic element significantly improves the display properties such as contrast, angle-of-sight property and the like of a twisted-nematic type liquid crystal display device and also greatly improves the mechanical properties of the liquid crystal display device. Therefore, the present optically anisotropic element is extremely useful in terms of industrial application.

### Brief Description of Drawings

Fig. 1 is a sectional view showing one example of a liquid crystal display device using an optically anisotropic element of the present invention.
Fig. 2 is a graph which shows the measurement results of transmittance in the up/down direction at each gradation of the liquid crystal display device of example 1.
Fig. 3 is a graph which shows the measurement results of transmittance in the comparative example 1.
Fig. 4 is a sectional view showing one example of a structure in which a laminated-layer structure is stacked to glass by way of an adhesive layer.
Fig. 5 is a sectional view showing one example of a structure in which a laminated-layer structure is stacked to glass by way of an adhesive layer.

Explanation of the reference numerals in the drawings are as follows.
- 1, 11: Polarizing plate
- 2: Diffusion adhesive layer
- 3, 9: Optically anisotropic film
- 4, 8, 10: Adhesive layer
- 5, 7: Glass base plate
- 6: Liquid Crystal
- 12: Glass
- 13: Light diffusion sheet
- 14: Adhesive layer or UV-setting type adhesive layer

## Claims

1. An optically anisotropic element comprising an optically anisotropic film (A) and at least one layer of light diffusion adhesive layer (B).

2. An optically anisotropic element claimed in claim 1, wherein the optically anisotropic film is an optically anisotropic film composed of liquid crystal molecules exhibiting one of positive uniaxiality and negative uniaxiality.

3. An optically anisotropic element claimed in claims 1 or 2, wherein the optically anisotropic film is formed from low-molecular weight and/or high-molecular weight liquid crystal.

4. An optical laminated-layer structure comprising the optically anisotropic element of claim 1 and a polarizing plate.

5. A twisted-nematic type liquid crystal display element comprising a liquid crystal cell for driving, the liquid crystal cell being composed of nematic liquid crystal and a pair of transparent base plate having an electrode; an upper side polarizing plate provided on the upper side of the liquid crystal cell; and a lower side polarizing plate provided on the lower side of the liquid crystal cell, **characterized in that** at least one layer of the optically anisotropic element of any of claims 1 to 3 is provided between the liquid crystal cell and one of the upper side polarizing plate and the lower side polarizing plate, or both between the liquid crystal cell and the upper side polarizing plate and between the liquid crystal cell and the lower side polarizing plate.

## Amended claims

### Amended claims under Art. 19.1 PCT

1. An optically anisotropic element comprising an optically anisotropic film (A) and at least one layer of light diffusion adhesive layer having a whole ray Transmittance of at least 50% and a diffusion transmittance of 10-90% (B).

2. An optically anisotropic element claimed in claim 1, wherein the optically anisotropic film is an optically anisotropic film composed of liquid crystal molecules exhibiting one of positive uniaxiality and negative uniaxiality.

3. An optically anisotropic element claimed in claims 1 or 2, wherein the optically anisotropic film is formed from low-molecular weight and/or high-molecular weight liquid crystal.

4. An optical laminated-layer structure comprising the optically anisotropic element of claim 1 and a polarizing plate.

5. A twisted-nematic type liquid crystal display element comprising a liquid crystal cell for driving, the liquid crystal cell being composed of nematic liquid crystal and a pair of transparent base plate having an electrode; an upper side polarizing plate provided on the upper side of the liquid crystal cell; and a lower side polarizing plate provided on the lower side of the liquid crystal cell, **characterized in that** at least one layer of the optically anisotropic element of any of claims 1 to 3 is provided between the liquid crystal cell and one of the upper side polarizing plate and the lower side polarizing plate, or both between the liquid crystal cell and the upper side polarizing plate and between the liquid crystal cell and the lower side polarizing plate.
